# EUROPÄISCHE PATENTSCHRIFT

(11) **EP 1 583 649 B1**
(45) Veröffentlichungstag und Bekanntmachung des Hinweises auf die Patenterteilung: **26.04.2006**
(21) Anmeldenummer: 03782363.0
(22) Anmeldetag: 09.12.2003
(51) Int. Cl.: B29C 47/92, G05D 5/03, G05B 13/04, B29D 7/01

(54) **VERFAHREN UND VORRICHTUNG ZUR REGELUNG DER DICKE EXTRUDIERTER FOLIE**
METHOD AND DEVICE FOR CONTROL OF THE THICKNESS OF EXTRUDED FILM
PROCEDE DE REGULATION DE L'EPAISSEUR DE PELLICULES EXTRUDEES

(30) Priorität: 06.01.2003 DE 10300375
(43) Veröffentlichungstag der Anmeldung: 12.10.2005
(73) Patentinhaber: Windmöller & Hölscher KG, 49525 Lengerich (DE)
(72) Erfinder: KÖNIG, Lothar, 49492 Westerkappeln (DE); TROMMELEN, Bartholomeus, 48599 Gronau (DE)
(86) Internationale Anmeldenummer: PCT/EP2003/014037
(87) Internationale Veröffentlichungsnummer: WO 2004/060637

(56) Entgegenhaltungen:
- EP-A- 0 329 157
- EP-A- 0 608 918
- WO-A-02/24434
- US-A- 3 904 338

## Beschreibung

Die Erfindung betrifft ein Verfahren sowie eine Vorrichtung zur Regelung der Dicke extrudierter Folie.

Derartige Verfahren werden sowohl bei der Flachfolien- als auch bei der Blasfolienextrusion eingesetzt.
Sie umfassen bei modernen Extrusionsanlagen in der Regel folgende Verfahrensschritte, welche auch im Oberbegriff des Anspruchs 1 angegeben sind:
- die Messung des Dickenprofils gerade extrudierter Folie mit Hilfe einer Dickenmesssonde, welche im wesentlichen quer (x) zur Förderrichtung (z) der extrudierten Folie entlang ihrer Oberfläche bewegt wird und pro Messzyklus (MZ) ein Dickenprofil (P) der Folie zumindest über Teile der Ausdehnung der Folie quer (x) zu ihrer Förderrichtung (z) aufzeichnet,
- die Übermittlung der Messwerte an eine Steuereinheit,
- das Speichern der den Dickenprofilen zugrundeliegenden Messwerten in einer Speichervorrichtung,
- das Bereitstellen statistischer Werte zu der Foliendicke durch eine Rechenvorrichtung, wobei die Rechenvorrichtung hierbei Messwerte oder von Messwerten abgeleitete Informationen aus oder zu einer bestimmten Anzahl von Messzyklen (MZ) berücksichtigt,
- die Ermittlung der Abweichungen der statistischen Werte zu der Foliendicke von einem Sollwert,
- das Generieren von Steuerbefehlen an Mittel zum Beeinflussen der Foliendicke

Die oben skizzierten Messeinrichtungen sind druckschriftlich bekannt. Die WO 02/24434 offenbart auch ein Verfahren sowie eine Vorrichtung zur Regelung der Dicke extrudierter Folie. Die DE 40 09 982 A1 zeigt einen kapazitiven Sensor zur Messung der Dicke der Wandung eines Folienschlauchs. Es werden jedoch auch anderer Messprinzipien zur Messung der Foliendicke angewandt. Als brauchbar haben sich beispielsweise auch die Messung des Transmissionsverhaltens von Beta-, Gamma-, Röntgen- und Infrarotstrahlung erwiesen. Bei Blasfolienanlagen werden sie in aller Regel um den gerade extrudierten Folienschlauch herumgeführt. Bei Flachfolienanlagen traversiert der Sensor über die Breite der extrudierten Flachfolie.

Hierbei dient das Entwickeln statistischer Aussagen zur zeitlichen Entwicklung der Foliendicke durch eine Rechenvorrichtung der Vermeidung eines Übersteuerns oder Überschwingens der Regelung. Zu diesem Zweck werden von der Rechenvorrichtung Messwerte einer bestimmten Anzahl von Messzyklen berücksichtigt. Die statistischen Werte bestehen in der Regel aus einer Mittelwert- oder Meridianbildung. Es können jedoch auch andere statistische Größen ermittelt werden.

Darüber hinaus ist es möglich, der Recheneinheit, statt der Messwerte selbst, von den Messwerten abgeleitete Informationen zur Verfügung zu stellen; Diese von Messwerten abgeleiteten Informationen können statistische Werte sein, die unter Berücksichtigung der neuesten Messwerte aktualisierte statistische Werte ergeben. So kann beispielsweise eine Mittelwertbildung vorgenommen werden, indem der Mittelwert aus den letzten n-Messungen der Recheneinheit zugeführt wird. Die Recheneinheit muss dann nur noch den aktuellen Messwert bei der Bildung des aktualisierten Mittelwerts berücksichtigen.

Von Messwerten abgeleitete Informationen können jedoch auch in aufgezeichneten "alten" Steuerbefehlen bestehen, welche vor dem Hintergrund aktueller Messwerte angepasst werden.

Die durch die Recheneinheit von den Messwerten abgeleiteten Informationen werden einer Steuereinheit zugeführt, welche Mittel zum Beeinflussen der Foliendicke steuert. Die Foliendicke kann auf verschiedene Weise beeinflusst werden. So kann beispielsweise die Breite des Düsenspaltes oder des Düsenringes abschnittweise variiert werden, um so den Durchfluss der Schmelze an den gewünschten Stellen erhöhen oder verringern zu können.

Die Steuereinheit kann aber auch die Temperatur der Schmelze über Heiz- und/oder Kühlmittel beeinflussen. Mit der Temperatur kann gezielt die Viskosität der Schmelze gesteuert werden. Ist die Viskosität einer Schmelze an einem Ort höher als an anderen Orten, so kann die Schmelze an diesem Ort stärker "zerfließen", was eine geringere Foliendicke an diesem Ort zur Folge hat.

Die Dicke der Folie kann ebenso durch stellenweises Recken variiert werden. Hierbei wird die Eigenschaft der Folie ausgenutzt, dass sich die bereits verfestigte, aber noch nicht vollständig erkaltete Folie noch recken lässt. Die stärker gereckten Folienbereiche weisen anschließend eine geringere Dicke auf als die weniger stark gereckten Bereiche. Die zum Recken notwendige Kraft wird häufig durch Blasluft zur Verfügung gestellt. Die Steuereinheit steuert in diesem Fall bereichsweise den Volumenstrom der Blasluft.

Die dargestellten Messverfahren haben sich in der Praxis insbesondere im Dauerbetrieb bewährt. Da in jüngster Zeit jedoch ein Trend zu kleineren Auftragsgrößen und damit zu einer häufigeren Umstellung des Folienmaterials zu verzeichnen ist, wird dem Regelverhalten zu Beginn des Extrusionsprozesses immer größere Bedeutung beigemessen.

Mit Regelverfahren nach dem Stand der Technik wird jedoch während einer nennenswerten Zeitspanne zu Beginn des Extrusionsprozesses Folienmaterial mit inakzeptablen Dickentoleranzen und damit Ausschuss produziert.

Daher ist es Aufgabe der vorliegenden Erfindung, nach Beginn des Extrusionsprozesses schneller die Dickenabweichungen der Folie zu senken.

Diese Aufgabe wird durch die gekennzeichnenden Merkmale der Ansprüche 1 und 7 gelöst.

Die vorliegende Erfindung macht sich zunutze, dass der Wert der statistischen Aussagen mit der Zahl der Messzyklen, welche den statistischen Aussagen nach ihnen zugrunde liegen, steigt.

Eine vorteilhafte Möglichkeit ist es, wenn die Dickenmesssonde während eines vorbestimmten Zeitraumes zu Beginn des Extrusionsprozesses schneller entlang der extrudierten Folie bewegt wird als im Normalbetrieb. Durch diese Maßnahme ist es möglich, pro Zeiteinheit Messwerte aus einer größeren Zahl von Messzyklen als im Normalbetrieb zu ermitteln und der Recheneinheit zugänglich zu machen.

Es werden Messwerte oder von Messwerten abgeleitete Informationen aus Messzyklen verwendet welche bei anderen Extrusionsprozessen aufgezeichnet wurden. Diese Messwerte oder die von den Messwerten abgeleiteten Informationen werden dabei der Recheneinheit von einer Speichereinheit zugänglich gemacht. Solche Messwerte oder von den Messwerten abgeleiteten Informationen können beispielsweise bei vorangegangener Herstellung von Folie gleicher Dicke auf der gleichen Extrusionsvorrichtung aufgezeichnet und gespeichert werden. Die Messwerte werden also jeweils nach Beendigung der Folienherstellung nicht verworfen.

Besonders vorteilhaft ist es dabei, wenn die Speichereinheit nur solche Messwerte oder von Messwerten abgeleitete Informationen der Recheneinheit zur Verfügung stellt, die aufgenommen wurden, als sich die Abweichungen der Foliendicke vom Sollwert innerhalb akzeptabler Toleranzen bewegten. Auf diese Weise kann die Steuereinheit die Mittel zur Beeinflussung der Foliendicke bereits zu Beginn des Extrusionsprozesses derart steuern, dass das Dickenprofil der Folie möglichst schnell die Ideallinie aufweist.

Des weiteren ist es vorteilhaft, den Messwerten oder den von Messwerten abgeleiteten Informationen aus unterschiedlichen Messzyklen verschiedene Gewichtungsfaktoren zuzuordnen. Diese Gewichtungsfaktoren definieren, wie stark die einzelnen Messwerte oder aus Messwerten abgeleiteten Informationen zu den statistischen Werten beitragen. Auf diese Weise können verschiedene Herstellungsparameter, die beispielsweise die Dicke der Folie beeinflussen, aber nicht direkt steuerbar sind, berücksichtigt werden.

Besonders vorteilhaft ist es dabei, die Gewichtungsfaktoren zu Beginn des Extrusionsprozesses zu verändern.

Auch eine zur Durchführung der erfindungsgemäßen Verfahren geeignete Vorrichtung ist Gegenstand dieser Anmeldung.

Diese Vorrichtung besitzt eine Speichervorrichtung, in welcher Messwerte oder aus Messwerten abgeleitete Informationen aus anderen Extrusionsprozessen abgelegt sind.

Vorteilhafterweise sind die Messwerte oder die aus Messwerten abgeleiteten Informationen aus anderen Extrusionsprozessen in der Speichervorrichtung den Prozessparametern, die herrschten, als sie aufgezeichnet wurden, zugeordnet.
Zu diesen Prozessparameter können unter anderem folgende Werte gehören:
↑ Zusammensetzung der Folienschichten
↑ Dicke der Folienschichten
↑ Abfolge der Folienschichten
↑ Umgebungstemperatur und Luftfeuchte
   Ein Ausführungsbeispiel der Erfindung geht aus den Zeichnungen und der gegenständlichen Beschreibung hervor.
   Die einzelnen Figuren zeigen:
   - Fig. 1: Seitenansicht einer erfindungsgemäßen Vorrichtung zum Herstellen von Folie nach dem erfindungsgemäßen Verfahren.
   - Fig. 2: Draufsicht auf die Vorrichtung aus Fig. 1

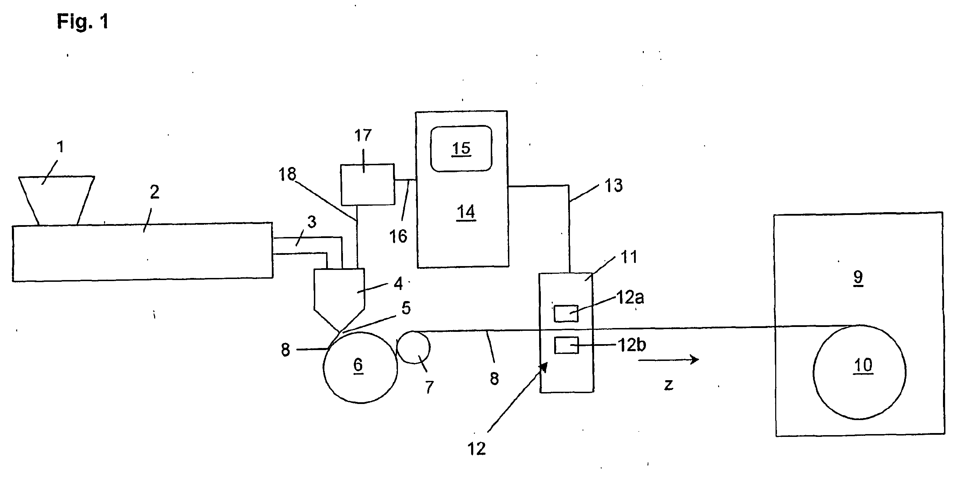

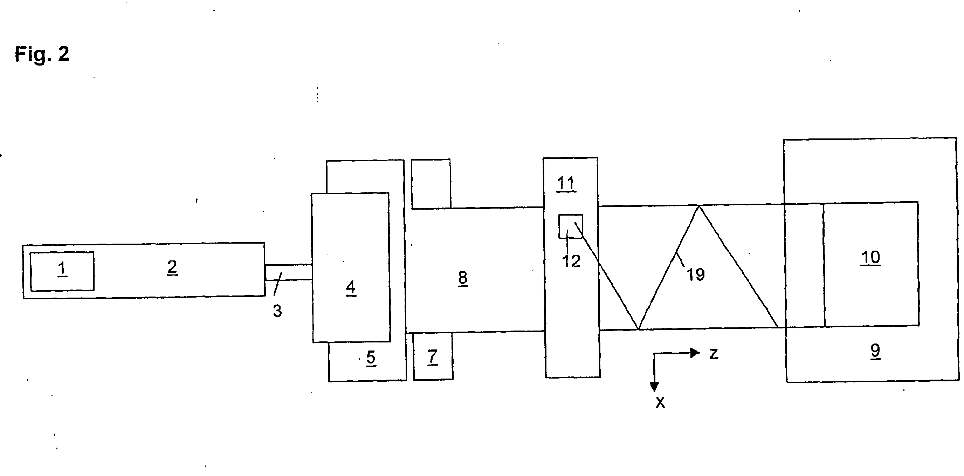

Fig. 1 und Fig. 2 zeigen eine Vorrichtung zum Herstellen von extrudierter Folie. Als Ausgangsmaterial zur Herstellung von Folien wird ein Granulat verwendet, das der Vorrichtung über den Fülltrichter 1 zugeführt wird. Von dort gelangt dieses in den Extruder 2, in dem das Granulat unter Anwendung von hohen Drücken zum Schmelzen gebracht wird. Diese Schmelze wird über die Leitung 3 der Breitschlitzdüse 4 zugeführt. Die Schmelze wird innerhalb der Breitschlitzdüse 4 im wesentlichen auf deren gesamte Breite verteilt. Durch den Düsenspalt 5 tritt die Schmelze aus und gelangt auf die Kühlwalze 6. Die Spaltbreite des Düsenspalts 5 kann auf nicht dargestellte Weise abschnittsweise verändert werden. Auf der Kühlwalze verfestigt sich die Schmelze und wird zur Folie 8. Diese Folie 8 umschlingt die Kühlwalze 6 zu einem großen Teil und wird dadurch stark abgekühlt. Über eine Umlenkwalze 7 wird die Folie 8 einer Wickelvorrichtung 9 zugeführt, wo sie zu einem Wickel 10 aufgewickelt wird.

Die Dicke der Folie 8 wird nach dem Passieren der Umlenkwalze 7 mit einer Dickenmessvorrichtung 11 vermessen. Die Dickenmessvorrichtung 11 umfasst die Dickenmesssonde 12, welche aus einem mit Sender 12a und einem Empfänger 12b besteht. Die Messwerte werden über eine Datenleitung 13 der Rechen- und Speichereinheit 14 zugeführt. Die Messwerte oder die daraus abgeleiteten Informationen können dem Maschinenbediener über den Monitor 15 zugänglich gemacht werden. Der Monitor 15 kann auch zur Eingabe von Parametern dienen. Gegebenenfalls kann hierzu auch ein anderes, nicht dargestelltes Eingabegerät verwendet werden. Die Rechen- und Speichereinheit 14 stellt über die Datenleitung 16 der Steuereinheit 17 Informationen zur Steuerung des Mittels zur Beeinflussung der Foliendicke zur Verfügung. Die Steuereinheit 17 ermittelt aus diesen Informationen Steuerbefehle und übermittelt diese über die Steuerleitung 18 an das Mittel zur Beeinflussung der Foliendicke. In der hier vorgestellten Ausführungsform der Erfindung dienen die Steuerbefehle der Variation der Spaltbreite des Düsenspalts 5.
Aus Fig. 2 ist der effektive Bahnverlauf 19 zu erkennen, den die Messköpfe 12 erzeugen, wenn sie sich mit gleichmäßiger Geschwindigkeit in Richtung (x) quer zur Förderrichtung (z) der Folie 8 bewegen. Zur Ermittlung eines vollständigen Dickenprofils der Folie 8 bewegen sich die Messköpfe 12 bis zu den Rändern der Folie 8.

| | |
|---|---|
| **Bezugszeichenliste** | |
| 1 | Fülltrichter |
| 2 | Extruder |
| 3 | Leitung |
| 4 | Breitschlitzdüse |
| 5 | Düsenspalt |
| 6 | Kühlwalze |
| 7 | Umlenkwalze |
| 8 | Folie |
| 9 | Wickelvorrichtung |
| 10 | Wickel |
| 11 | Dickenmessvorrichtung |
| 12 | Dickenmesssonde |
| 13 | Datenleitung |
| 14 | Rechen- und Speichereinheit |
| 15 | Monitor |
| 16 | Datenleitung |
| 17 | Steuereinheit |
| 18 | Steuerleitung |
| 19 | Effektiver Bahnverlauf |
| | |
| 12a | Sender der Dickenmesssonde |
| 12b | Empfänger der Dickenmesssonde |
| | |
| x | Bewegungsrichtung des Messkopfes 11 |
| z | Förderrichtung |

## Patentansprüche

1. Verfahren zur Regelung der Dicke extrudierter Folie, welches folgende Verfahrensmerkmale umfasst:
- die Messung des Dickenprofils gerade extrudierter Folie (8) mit Hilfe einer Dickenmesssonde (12), welche im wesentlichen quer (x) zur Förderrichtung (z) der extrudierten Folie (8) entlang ihrer Oberfläche bewegt wird und pro Messzyklus (MZ) ein Dickenprofil (P) der Folie (8) zumindest über Teile der Ausdehnung der Folie (8) quer (x) zu ihrer Förderrichtung (z) aufzeichnet,
- die Übermittlung der Messwerte an eine Steuereinheit (14,15,17),
- das Speichern der den Dickenprofilen zugrundeliegenden Messwerte in einer Speichervorrichtung (14),
- das Bereitstellen statistischer Werte zu der Foliendicke (5) durch eine Rechenvorrichtung (14), wobei die Rechenvorrichtung (14) hierbei Messwerte oder von Messwerten abgeleitete Informationen aus einer bestimmten Anzahl von Messzyklen (MZ) berücksichtigt,
- die Ermittlung der Abweichungen der statistischen Werte zu der Foliendicke (5) von einem Sollwert,
- das Generieren von Steuerbefehlen an Mittel zum Beeinflussen der Foliendicke (5)
**dadurch gekennzeichnet,**
■ **dass** der Rechenvorrichtung (14) während eines vorbestimmten Zeitraumes zu Beginn des Extrusionsprozesses Messwerte oder von Messwerten abgeleitete Informationen aus oder zu einer größeren Anzahl von Messzyklen zugänglich gemacht werden, als die Dickenmesssonde (12) in einem gleichlangen Zeitraum während des Normalbetriebs aufzeichnet, und
■ **dass** die Rechenvorrichtung (14) diese Messwerte bei der Bereitstellung der statistischen Werte berücksichtigt,
■ **wobei** zumindest ein Teil dieser Messwerte von der Speichervorrichtung (14) stammt,
■ **welche** (14) Messwerte oder von Messwerten abgeleitete Infor mationen der Recheneinheit (14) zugänglich macht,
■ **wobei** diese Messwerte oder von Messwerten abgeleiteten Informationen aus Messzyklen stammen, welche bei einem anderen Extrusionsprozess aufgezeichnet wurden.

2. Verfahren nach Anspruch 1,
**dadurch gekennzeichnet, dass**
- die Dickenmesssonde (12) während eines vorbestimmten Zeitraumes zu Beginn des Extrusionsprozesses schneller entlang der Oberfläche der extrudierten Folie (8) bewegt wird als im Normalbetrieb
- und dabei pro Zeiteinheit Messwerte aus einer größeren Anzahl von Messzyklen als im Normalbetrieb ermittelt
- und der Recheneinheit (14) zugänglich macht.

3. Verfahren nach einem der vorstehenden Ansprüche,
**dadurch gekennzeichnet, dass**
die Speichereinheit (14) der Recheneinheit (14) Messwerte oder von Messwerten abgeleitete Informationen zugänglich macht, die aufgenommen wurden, als sich die Abweichungen der Foliendicke (5) vom . Sollwert innerhalb akzeptabler Toleranzen bewegten.

4. Verfahren nach einem der vorstehenden Ansprüche,
**dadurch gekennzeichnet, dass**
den Messwerte oder den von Messwerten abgeleiteten Informationen aus unterschiedlichen Messzyklen verschiedene Gewichtungsfaktoren zugeordnet werden, mit weichen der Beitrag der Messwerte oder der von den Messwerten abgeleiteten Informationen zu den statistischen Werten definiert wird.

5. Verfahren dem vorstehenden Anspruch,
**dadurch gekennzeichnet, dass**
diese Gewichtungsfaktoren zu Beginn des Extrusionsprozesses verändert werden.

6. Verfahren nach einem der vorstehenden Ansprüche,
**dadurch gekennzeichnet, dass** die Messwerte oder die aus Messwerten abgeleiteten Informationen aus anderen Extrusionsprozessen in der Speichervorrichtung (14) den Prozessparametem, die herrschten als sie aufgezeichnet wurden, zugeordnet werden.

7. Vorrichtung zur Regelung der Dicke extrudierter Folie (8), welche folgende Merkmale aufweist:
- eine Dickenmesssonde (12) zur Messung des Dickenprofils gerade extrudierter Folie (8), welche im wesentlichen quer (x) zur Förderrichtung (z) der extrudierten Folie (8) entlang der Oberfläche der Folie (8) bewegt wird und pro Messzyklus (MZ) ein Dickenprofil (P) der Folie (8) zumindest über Teile der Ausdehnung der Folie (8) quer (x) zu ihrer Förderrichtung (z) aufzeichnet,
- die Übermittlung der Messwerte an eine Steuereinheit (14,15,17),
- eine Speichervorrichtung (14) zur Aufzeichnung von Messwerten und von Messwerten abgeleiteten Informationen,
- eine Rechenvorrichtung (14) zum Bereitstellen statistischer Werte zu der Foliendicke (5) unter Berücksichtigung der Messwerte oder der von Messwerten abgeleiteten Informationen aus einer bestimmten Anzahl von Messzyklen (MZ),
- wobei auch die Abweichungen der statistischen Werte zu der Foliendicke (5) von einem Sollwert mit der Recheneinheit (14) ermittelbar sind,
- eine Vorrichtung (17) zum Generieren von Steuerbefehlen an Mittel zum Beeinflussen der Foliendicke (5),
- eine Rechenvorrichtung (14), mit der während eines vorbestimmten Zeitraums zu Beginn des Extrusionsprozesses Messwerte oder von Messwerten abgeleitete Informationen aus oder zu einer größeren Anzahl von Messzyklen berücksichtigbar sind, als die Dickenmesssonde in einem gleichen Zeitraum während des Normalbetriebs aufzeichnet, und
- Kommunikationsmittel zwischen der Speichereinheit (14) und der Recheneinheit (14), durch welche während eines vorbestimmten Zeitraums zu Beginn des Extrusionsprozesses zumindest ein Teil der Messwerte oder von Messwerten abgeleitete Informationen, welche die Recheneinheit (14) zu dieser Zeit berücksichtigt, der Recheneinheit zugänglich machbar sind,
**gekennzeichnet durch**
- eine Speichereinheit (14), in der Messwerte oder von Messwerten abgeleitete Informationen aus Messzyklen, welche bei einem anderen Extrusionsprozess aufgezeichnet wurden, ablegbar sind.

## Claims

1. Method for controlling the thickness of extruded film, which comprises the following method features:
- measuring the thickness profile of just extruded film (8) with the aid of a thickness measuring probe (12), which is moved substantially transversely (x) in relation to the conveying direction (z) of the extruded film (8) along its surface and records in each measuring cycle (MZ) a thickness profile (P) of the film (8) at least over parts of the extent of the film (8) transversely (x) in relation to its conveying direction (z),
- transmitting the measured values to a control unit (14, 15, 17),
- storing the measured values on which the thickness profiles are based in a memory device (14),
- providing statistical values concerning the film thickness (5) by an arithmetic device (14), the arithmetic device (14) hereby taking into account measured values or information derived from measured values from a specific number of measuring cycles (MZ),
- determining the deviations of the statistical values concerning the film thickness (5) from a setpoint value,
- generating control commands to means for influencing the film thickness (5),
**characterized**
• **in that**, during a predetermined time period at the beginning of the extrusion process, the arithmetic device (14) is supplied with measured values or information derived from measured values from or concerning a greater number of measuring cycles than the thickness measuring probe (12) records in a time period of equal length during normal operation, and
• **in that** the arithmetic device (14) takes these measured values into account when providing the statistical values,
• at least some of these measured values originating from the memory device (14),
• which (14) supplies the arithmetic unit (14) with measured values or information derived from measured values,
• these measured values or this information derived from measured values originating from measuring cycles which were recorded in the case of another extrusion process.

2. Method according to Claim 1, **characterized in that**
- the thickness measuring probe (12) is moved more quickly along the surface of the extruded film (8) during a predetermined time period at the beginning of the extrusion process than in normal operation
- and measured values are thereby determined per unit of time from a greater number of measuring cycles than in normal operation
- and supplied to the arithmetic unit (14).

3. Method according to one of the preceding claims, **characterized in that** the memory unit (14) supplies the arithmetic unit (14) with measured values or information derived from measured values recorded when the deviations of the film thickness (5) from the setpoint value were within acceptable tolerances.

4. Method according to one of the preceding claims, **characterized in that** the measured values or the information derived from measured values are assigned different weighting factors from different measuring cycles, with which the contribution of the measured values or of the information derived from the measured values to the statistical values is defined.

5. Method according to the preceding claim, **characterized in that** these weighting factors are changed at the beginning of the extrusion process.

6. Method according to one of the preceding claims, **characterized in that** the measured values or the information derived from measured values from other extrusion processes are assigned in the memory device (14) to the process parameters that applied when they were recorded.

7. Device for controlling the thickness of extruded film (8), which has the following features:
- a thickness measuring probe (12) for measuring the thickness profile of just extruded film (8), which is moved substantially transversely (x) in relation to the conveying direction (z) of the extruded film (8) along the surface of the film (8) and records in each measuring cycle (MZ) a thickness profile (P) of the film (8) at least over parts of the extent of the film (8) transversely (x) in relation to its conveying direction (z),
- transmitting the measured values to a control unit (14, 15, 17),
- a memory device (14) for recording measured values and information derived from measured values,
- an arithmetic device (14) for providing statistical values concerning the foil thickness (5), taking into account the measured values or the information derived from measured values from a specific number of measuring cycles (MZ),
- the deviations of the statistical values concerning the film thickness (5) from a setpoint value also being determinable with the arithmetic unit (14),
- a device (17) for generating control commands to means for influencing the film thickness (5),
- an arithmetic device (14), with which, during a predetermined time period at the beginning of the extrusion process, measured values or information derived from measured values from or concerning a greater number of measuring cycles than the thickness measuring probe records in a time period of equal length during normal operation can be taken into account, and
- communication means between the memory unit (14) and the arithmetic unit (14), by which means, during a predetermined time period at the beginning of the extrusion process, at least some of the measured values or information derived from measured values which the arithmetic unit (14) takes into account at this time being able to be supplied to the arithmetic unit,
**characterized by**
- a memory unit (14), in which the measured values or information derived from measured values from measuring cycles recorded in the case of another extrusion process can be stored.

## Revendications

1. Procédé de régulation de l'épaisseur de pellicules extrudées qui comprend les caractéristiques de procédé suivantes:
- mesure du profil d'épaisseur de pellicules droites extrudées (8) à l'aide d'une sonde de mesure d'épaisseur (12) qui est déplacée sensiblement perpendiculairement (x) au sens d'avancement (z) de la pellicule extrudée (8) le long de sa surface et qui enregistre, par cycle de mesure, un profil d'épaisseur (P) de la pellicule (8) au moins sur des parties de l'extension de la pellicule (8) perpendiculairement (x) à son sens d'avancement (z),
- transmission des valeurs de mesure à une unité de commande (14, 15, 17),
- mémorisation des valeurs de mesure sur lesquelles sont basés les profils d'épaisseur dans un dispositif de mémorisation (14),
- fourniture de valeurs statistiques relatives à l'épaisseur de la pellicule (5) au moyen d'un dispositif de calcul (14), le dispositif de calcul (14) tenant compte pour cela de valeurs de mesure ou d'informations déduites de valeurs de mesure à partir d'un nombre déterminé de cycles de mesure (MZ),
- détermination des écarts des valeurs statistiques relatives à l'épaisseur de la pellicule (5) par rapport à une valeur consigne,
- envoi d'ordres de commande à des moyens pour influencer l'épaisseur de la pellicule (5),
**caractérisé en ce que**
- pendant une durée prédéterminée au début du processus d'extrusion, des valeurs de mesure ou des informations déduites des valeurs de mesure sont rendues accessibles au dispositif de calcul (14) à partir d'un ou vers un plus grand nombre de cycles de mesure que celui enregistré par la sonde de mesure d'épaisseur (12) pendant une durée de même longueur pendant le fonctionnement normal, et
- le dispositif de calcul (14) tient compte de ces valeurs de mesure lors de la fourniture des valeurs statistiques,
- au moins une partie de ces valeurs de mesure provenant du dispositif de mémorisation (14),
qui (14) rend accessibles les valeurs de mesure ou les informations déduites des valeurs de mesure au dispositif de calcul (14),
- ces valeurs de mesure ou ces informations déduites des valeurs de mesure provenant de cycles de mesure qui ont été enregistrés pendant un autre processus d'extrusion.

2. Procédé selon la revendication 1,
**caractérisé en ce que**
- la sonde de mesure d'épaisseur (12) est déplacée plus rapidement le long de la surface de la pellicule extrudée (8) pendant une durée prédéterminée au début du processus d'extrusion que pendant le fonctionnement normal,
- et détermine, par unité de temps, des valeurs de mesure à partir d'un plus grand nombre de cycles de mesure que pendant le fonctionnement normal,
- et les rend accessibles au dispositif de calcul (14).

3. Procédé selon l'une quelconque des revendications précédentes,
**caractérisé en ce que**
le dispositif de mémorisation (14) rend accessibles au dispositif de calcul (14) les valeurs de mesure ou les informations déduites des valeurs de mesure qui ont été enregistrées lorsque les écarts de l'épaisseur de la pellicule (5) se trouvaient dans des tolérances acceptables par rapport à la valeur consigne.

4. Procédé selon l'une quelconque des revendications précédentes,
**caractérisé en ce que**
différents facteurs de pondération, avec lesquels la contribution des valeurs de mesure ou des informations déduites des valeurs de mesure aux valeurs statistiques est définie, sont affectés aux valeurs de mesure ou aux informations déduites des valeurs de mesure à partir de différents cycles de mesure.

5. Procédé selon l'une quelconque des revendications précédentes,
**caractérisé en ce que**
ces facteurs de pondération sont modifiés au début du processus d'extrusion.

6. Procédé selon l'une quelconque des revendications précédentes,
**caractérisé en ce que**
les valeurs de mesure ou les informations déduites des valeurs de mesure provenant d'autres processus d'extrusion sont affectées dans le dispositif de mémorisation (14) aux paramètres de processus qui régnaient lorsqu'elles ont été enregistrées.

7. Dispositif de régulation de l'épaisseur de pellicules extrudées (8) qui présente les caractéristiques suivantes:
- une sonde de mesure d'épaisseur (12) pour mesurer le profil d'épaisseur de pellicules droites extrudées (8) qui est déplacée sensiblement perpendiculairement (x) au sens d'avancement (z) de la pellicule extrudée (8) le long de sa surface et qui enregistre, par cycle de mesure, un profil d'épaisseur (P) de la pellicule (8) au moins sur des parties de l'extension de la pellicule (8) perpendiculairement (x) à son sens d'avancement (z),
- la transmission des valeurs de mesure à une unité de commande (14, 15, 17),
- un dispositif de mémorisation (14) pour la mémorisation de valeurs de mesure ou d'informations déduites de valeurs de mesure,
- un dispositif de calcul (14) pour fournir des valeurs statistiques relatives à l'épaisseur de la pellicule (5) en tenant compte des valeurs de mesure ou des informations déduites des valeurs de mesure à partir d'un nombre déterminé de cycles de mesure (MZ),
- les écarts des valeurs statistiques relatives à l'épaisseur de la pellicule (5) par rapport à une valeur consigne pouvant être également déterminées avec le dispositif de calcul (14),
- un dispositif (17) pour envoyer des ordres de commande à des moyens pour influencer l'épaisseur de la pellicule (5),
- dispositif de calcul (14) avec lequel, pendant une durée prédéterminée au début du processus d'extrusion, des valeurs de mesure ou des informations déduites des valeurs de mesure peuvent être prises en compte à partir d'un ou vers un plus grand nombre de cycles de mesure que celui enregistré par la sonde de mesure d'épaisseur (12) pendant une durée de même longueur pendant le fonctionnement normal, et
- des moyens de communication entre le dispositif de mémorisation (14) et le dispositif de calcul (14), au moyen desquels, pendant une durée prédéterminée au début du processus d'extrusion, au moins une partie des valeurs de mesure ou des informations déduites des valeurs de mesure, qui sont prises en compte par le dispositif de calcul (14) à ce moment-là, sont accessibles au dispositif de calcul (14),
**caractérisé par**
- un dispositif de mémorisation (14) dans lequel les valeurs de mesure ou les informations déduites des valeurs de mesure provenant de cycles de mesure qui ont été enregistrés pendant un autre processus d'extrusion peuvent être déposées.
